# FASCICULE DE BREVET EUROPEEN

(11) **EP 1 826 067 B1**
(45) Date de publication et mention de la délivrance du brevet: **26.10.2011**
(21) Numéro de dépôt: 07300803.9
(22) Date de dépôt: 21.02.2007
(51) Int. Cl.: B60R 16/02

(54) **Goulotte électrique pour véhicule automobile**
Elektrischer Kabelkanal für Kraftfahrzeuge
Electric raceway for an automobile

(30) Priorité: 28.02.2006 FR 0650700
(43) Date de publication de la demande: 29.08.2007
(73) Titulaire: RENAULT S.A.S., 92100 Boulogne Billancourt (FR)
(72) Inventeur: Carmona, Pedro, 78180 Montigny-Le Bretonneux (FR); Roy, Arnaud, 92160 Antony (FR); Saubion, Mathieu, 78180 Montigny-Le Bretonneux (FR)

(56) Documents cités:
- US-A- 5 806 812
- US-A- 6 087 593
- US-B1- 6 206 331

## Description

### DOMAINE TECHNIQUE

La présente invention concerne une goulotte électrique, destinée au cheminement et au maintien d'un ou plusieurs câbles et faisceaux de câbles électriques. L'invention se rapporte également à un véhicule automobile avec un ensemble moteur à combustion interne comprenant une telle goulotte se fixant sur un support.

Les installations électriques dans les habitations ou les bureaux, comme dans les véhicules automobiles, sont réalisées en installant des goulottes porte-câbles appropriées. De cette façon, non seulement la mise oeuvre des installations est plus facile, mais les câbles électriques sont également facilement accessibles pour d'éventuelles interventions d'entretien.

Une goulotte électrique de logement de câbles électriques est généralement en matière isolante, par exemple en polymère. La goulotte comprend une paroi de fond et deux parois latérales en une seule pièce avec la paroi de fond. Ces parois déterminent un compartiment de logement qui constitue le volume utile de la goulotte délimitant un canal dans lequel le ou les câbles sont posés.

Dans le cas plus spécifique d'un véhicule automobile, une goulotte permet de regrouper les câbles, en fonction de la proximité de leur point de connexion de départ et de leur point de connexion d'arrivée. Insérés au fond d'une goulotte, les câbles sont insensibles aux vibrations engendrées par le moteur à combustion interne. Avec les goulottes, les risques de débranchement des câbles au niveau des connecteurs électriques deviennent extrêmement réduits. De plus, en cas de panne du véhicule, les câbles ne viennent pas gêner le champ de vision et les manipulations lors des interventions d'un réparateur.

### ÉTAT DE LA TECHNIQUE ANTÉRIEURE

Les goulottes doivent être fermement immobilisées au niveau de la caisse, du châssis ou de différents supports présents à l'intérieur et constitutifs du véhicule. Pour ce faire, les goulottes peuvent être fixées par des rivets et par des vis.

Cependant, lors du montage de la goulotte sur son support récepteur, l'opérateur utilise une riveteuse ou une visseuse électrique. Pour effectuer un travail soigneux et rapide, l'opérateur doit pouvoir manipuler facilement ses outils. Or, ces systèmes de montage ne sont pas toujours envisageables, en raison de l'exiguïté des volumes dans lesquels doivent s'insérer les goulottes. De plus, une modification architecturale de l'environnement pour permettre le passage des outils est extrêmement complexe, notamment en raison de l'augmentation du nombre d'équipements embarqués à bord du véhicule. Une modification du support lui-même, avec un bossage et un taraudage d'un orifice ménagé dans ce bossage, pour permettre la fixation de la goulotte par vissage, n'est également pas possible.

Le document US 5 806 812 décrit un exemple d'un ensemble permettant de fixer les câbles au niveau d'un support présent sur un véhicule automobile. L'ensemble comprenant un élément mâle de fixation faisant saillie et muni d'ailettes latérales.

### EXPOSÉ DE L'INVENTION

Un problème principal que se propose de résoudre l'invention consiste à mettre au point une goulotte pour câbles électriques, spécifiquement adaptée à l'environnement d'un véhicule automobile. Un deuxième problème est d'optimiser la fixation de la goulotte à un support présent dans le véhicule. Un autre problème encore est la nécessité de réaliser une goulotte comprenant des moyens permettant de réaliser sa fixation simple, efficace et sans outils sur un support.

L'invention concerne donc une goulotte, pour véhicule automobile, destinée à faire cheminer et à maintenir un ou plusieurs câbles électriques, comprenant :
- un corps principal, formant un canal, dans lequel s'insère le ou les câbles électriques, et
- un élément mâle de fixation, associé au corps principal et apte à pénétrer dans un orifice ménagé dans un support présent dans le véhicule,
de façon à la solidariser au support et comprenant des moyens d'ancrage formés par au moins une première ailette, se déployant latéralement à partir du pion rectiligne, possédant une capacité de déformation et venant coopérer avec l'orifice du support, de façon à empêcher toute sortie de l'élément mâle de l'orifice et à empêcher la goulotte de se désolidariser dudit support.

Conformément à un aspect de la présente invention, la goulotte est caractérisée en ce que la première ailette se déploie latéralement à partir de la base, en direction de l'extrémité libre pointue du pion, ladite ailette venant en appui contre une paroi extérieure entourant l'orifice du support et en ce qu'une seconde ailette se déploie latéralement à partir de l'extrémité libre pointue, en direction de la base du pion, ladite ailette venant en appui contre une paroi intérieure entourant l'orifice du support.

Autrement dit, l'élément de fixation mâle est introduit dans l'orifice, jouant le rôle d'élément de fixation femelle. Avec ses moyens d'ancrage, l'élément mâle se comporte de manière analogue à un harpon. Cet élément mâle reste bloqué à l'intérieur de l'orifice, par la présence des moyens d'ancrage de type souples ou élastiques. La goulotte va être arrimée au support présent dans le véhicule automobile. Ainsi, l'élément mâle de fixation est dépourvu de filetage. L'orifice du support est dépourvu de taraudage.

Par la présence d'un tel élément mâle, le montage de la goulotte sur le support se réalise sans aucun outil, par exemple par simple pression du pouce. Par la présence de moyens d'ancrage se déformant, l'élément mâle peut s'insérer dans des orifices débouchants ou borgnes, lisses ou non.

L'élément mâle peut préférentiellement être formé par un pion rectiligne avec une base et une extrémité libre pointue. Le pion permet un guidage et un positionnement précis dans l'orifice, facilitant ainsi la mise en place de la goulotte. De manière particulièrement favorable, les moyens d'ancrage peuvent être formés par au moins une ailette. L'ailette ou les ailettes peuvent se déployer latéralement à partir du pion rectiligne.

Dans une première forme de réalisation de l'élément mâle de fixation, l'ailette ou les ailettes peuvent se déployer latéralement à partir de l'extrémité libre pointue. L'ailette ou les ailettes peuvent être orientées en direction de la base du pion. Cette ailette ou ces ailettes peuvent venir en appui contre une paroi intérieure entourant l'orifice du support. De cette manière, la ou les ailettes souples empêchent le pion de ressortir de l'orifice à l'intérieur duquel il est enfoncé.

Dans la première forme de réalisation, l'ailette ou les ailettes peuvent se déployer latéralement à partir de la base. L'ailette ou les ailettes peuvent être orientées en direction de l'extrémité libre pointue du pion. Cette ailette ou ces ailettes peuvent venir en appui contre une paroi extérieure entourant l'orifice du support. De cette manière, la ou les ailettes souples de butée facilitent la mise en place et le bon maintien de l'élément mâle de fixation et de la goulotte, en rattrapant les tolérances de longueur de l'orifice.

Dans une deuxième forme de réalisation de l'élément mâle de fixation, l'ailette ou les ailettes peuvent se déployer latéralement à partir du pion. L'ailette ou les ailettes peuvent prendre une configuration sensiblement perpendiculairement par rapport à l'axe longitudinal de ce pion. Cette ailette ou ces ailettes peuvent venir en appui contre une paroi interne de l'orifice du support. Cette ailette ou ces ailettes peuvent venir en appui contre une paroi intérieure entourant l'orifice du support. Cette ailette ou ces ailettes peuvent venir en appui contre une paroi extérieure entourant l'orifice du support.

L'élément mâle peut avantageusement faire sailli latéralement à partir d'une patte transversale du corps principal de la goulotte. La patte peut se déployer sensiblement perpendiculairement par rapport au corps principal et sur une face opposée au canal.

Selon un autre aspect de la présente invention, un véhicule automobile est caractérisé en ce qu'il comprend une goulotte, possédant une ou plusieurs des caractéristiques techniques décrites ci-dessus, destinée à faire cheminer et à maintenir un ou plusieurs câbles électriques et fixée sur un support présent dans un ensemble moteur) à combustion interne.

Le support peut être un carter d'embrayage ou tout autre élément du moteur. Dans ce type de support, l'élément mâle pénètre dans un orifice ménagé dans le carter ou dans l'autre élément du moteur.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue du dessus en perspective d'une goulotte fixée sur un support en vue écorché ;
- la Figure 2 représente une vue en perspective latérale de la goulotte avec un élément mâle de fixation selon une première forme de réalisation ;
- la Figure 3 représente une vue en perspective agrandie de l'élément mâle de fixation de la Figure 2 ;
- la Figure 4 représente une vue du dessus en perspective de la goulotte avec un élément mâle de fixation selon une deuxième forme de réalisation ; et
- la Figure 5 représente une vue en perspective de l'élément mâle de fixation de la Figure 4.

### EXPOSÉ DÉTAILLÉ DE MODES DE RÉALISATION PRÉFÉRÉS

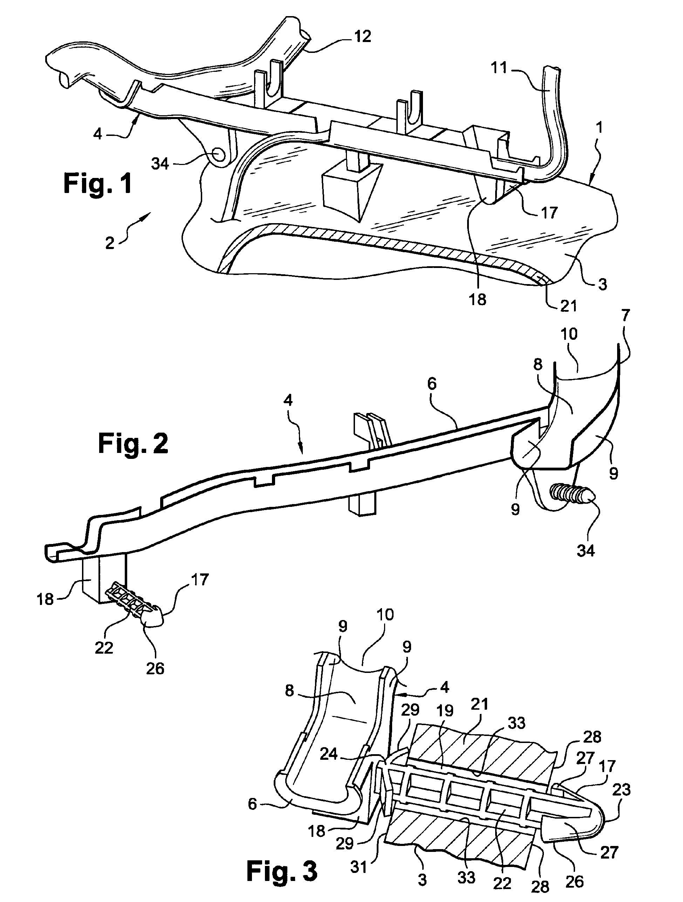

Comme l'illustre la Figure 1, un moteur à combustion interne (1) est installé dans un compartiment moteur (2) d'un véhicule automobile. Le moteur à combustion interne (1) comprend un carter d'embrayage (3). A titre d'exemple, une goulotte électrique (4) est fixée en partie supérieure du carter d'embrayage (3), qui forme alors un support.

La goulotte (4) prend plusieurs configurations avec un corps principal formé avec un passage allongé (6), de grande longueur, et une ramification latérale (7), plus courte. Le passage principal (6) et la ramification latérale (7) forment un canal. Dans le passage allongé (6) et dans la ramification latérale (7), la goulotte (4) est formée avec une paroi de fond (8) et deux parois latérales (9) délimitant le canal (10). La paroi de fond (8) est située globalement dans un seul et même plan, bien que différentes formes soient également possibles. Les parois latérales (9) sont sensiblement perpendiculaires à la paroi de fond (8).

Un faisceau de câbles de petit diamètre (11) est inséré dans le canal (10) du passage allongé (6). Le faisceau de petit diamètre (11) rejoint un faisceau de câbles de plus gros diamètre (12), ce dernier étant inséré dans le canal (10) de la ramification latérale (7) de la goulotte (4). Les faisceaux (11 et 12) cheminent au fond de la goulotte (4), en étant posés sur la paroi de fond (8) et en étant maintenus par les deux parois latérales (9).

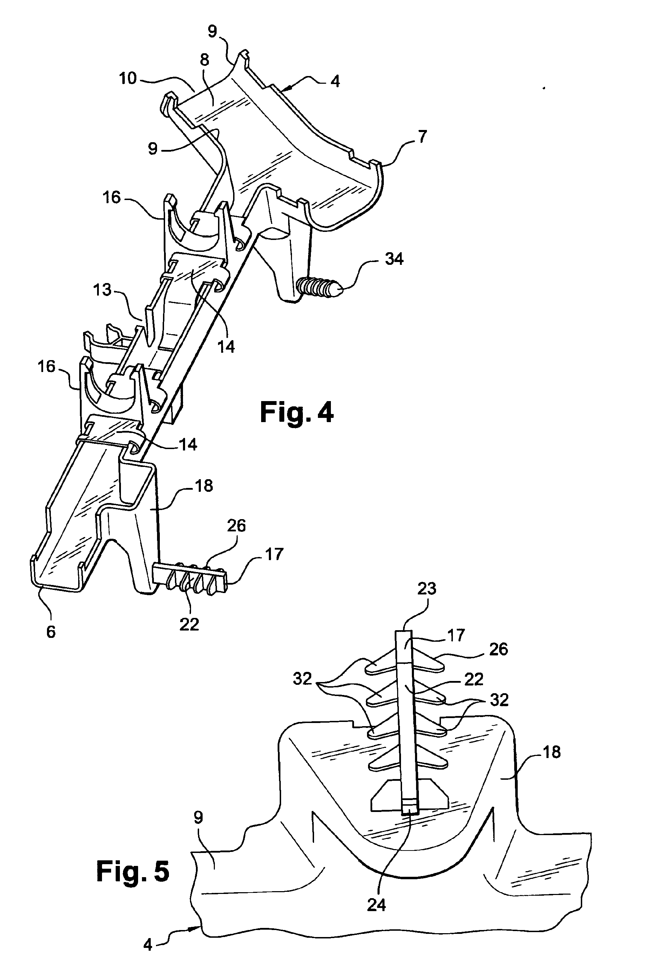

Comme le montre plus visiblement la Figure 4, l'une des parois latérales (12) est munie d'une échancrure (13) pour permettre la sortie hors de la goulotte (4) de l'un des brins extrait du faisceau de câbles (11). Certaines zones du passage allongé (6) peuvent être équipées par un couvercle de protection (14). D'autres pièces d'assemblage (16) sont également prévues sur la goulotte (4).

La goulotte (4) est arrimée sur le carter d'embrayage (3) au moyen d'un élément de fixation (17). L'élément de fixation (17) fait sailli latéralement à partir d'une patte (18). Comme le montrent les Figures 2 et 3, la patte (18) se déploie vers le bas à partir de et à l'opposé du plan formé par la paroi de fond (8) de la goulotte (4). L'élément de fixation (17) se retrouve perpendiculaire à l'une des deux parois latérales (9).

L'élément de fixation (17) constitue un élément mâle venant s'insérer dans un orifice (19) ménagé dans la paroi (21) du carter d'embrayage (3). Cet élément de fixation (17) est un pion droit (22), présentant par exemple une longueur sensiblement égale à 21 mm et un diamètre sensiblement égal à 11 mm. Le pion (22) est sensiblement perpendiculaire au plan formé par la patte (18). Le pion (22) comprend une extrémité libre pointue (23) et une base (24) se rattachant à la patte (18).

Selon l'invention, le pion (22) comprend des moyens d'ancrage de l'élément de fixation (17), possédant des capacités de souplesse ou d'élasticité et aptes à coopérer avec l'orifice (19). Ces moyens d'ancrages sont formés à partir de plusieurs ailettes souples (26). Les ailettes (26) se déploient latéralement à partir du fût du pion rectiligne (22).

Une fois que l'élément de fixation (17) avec son pion (22) est inséré dans l'orifice (19), les ailettes (26) coopèrent avec ce même orifice (19), de façon à empêcher toute sortie de cet élément de fixation (17) hors de l'orifice (19). La goulotte (4) reste ancrée au carter (3), en raison d'une coopération intime entre les ailettes (26) et l'orifice (19).

Dans une première forme de réalisation (voir Figures 2 et 3), deux ailettes d'extrémité (27) se déploient en partant de l'extrémité libre pointue (23) du pion (22). Les deux ailettes d'extrémité (27) sont à l'opposé l'une de l'autre, latéralement de part et d'autre du pion (22). Les ailettes d'extrémité (27) sont orientées et inclinées, en direction de la patte (18) et de la base (24) du pion (22).

Lorsque l'élément de fixation (17) est complètement inséré dans l'orifice (19), les ailettes d'extrémité (27) viennent en appui contre une surface (28) de la paroi (21), située à l'intérieur du carter (3) et autour de l'orifice (19) ménagé dans la paroi (21). Lors de l'insertion de l'élément de fixation (17), les ailettes d'extrémité (27) se resserrent contre le pion (22) et sont coincées dans l'orifice (19). A la fin de l'insertion de l'élément de fixation (17), les ailettes l'extrémité (27) ressortent à l'opposé de l'entrée et se redéploient et s'écartent du pion (22), en raison de leur élasticité. Les ailettes l'extrémité (27) forment ainsi un blocage.

Toujours dans la première forme de réalisation, deux ailettes de base (29) se déploient en partant de la base (24) du pion (22). Les deux ailettes de base (29) sont à l'opposé l'une de l'autre, latéralement de part et d'autre du pion (22). Les ailettes de base (29) sont orientées et légèrement inclinées, en direction de l'extrémité libre pointue (23) du pion (22) et à l'opposé de la patte (18).

Lorsque l'élément de fixation (17) est complètement inséré dans l'orifice (19), les ailettes de base (29) viennent en appui contre une surface (31) de la paroi (21), située à l'extérieur du carter (3) et autour de l'orifice (19) ménagé dans la paroi (21). Les ailettes de base (29) facilitent les efforts de mise en place de l'élément de fixation (17) et assurent le bon maintien de la goulotte (4), en rattrapant les tolérances de longueur et d'inclinaison du pion (22).

Dans une deuxième forme de réalisation (voir Figures 4 et 5), des ailettes centrales (32) se déploient de manière équidistante, tout au long du pion (22). Les ailettes centrales (32) sont regroupées, deux par deux, à l'opposé l'une de l'autre, latéralement de part et d'autre du pion (22). Les ailettes centrales (32) sont sensiblement perpendiculaires par rapport à l'axe longitudinal du pion (22).

Lorsque l'élément de fixation (17) est complètement inséré dans l'orifice (19), plusieurs des ailettes centrales (32), sont complètement repliées dans l'orifice (19) et viennent en appui contre une surface interne (33) de l'orifice (19) dans la paroi (21). La surface interne (33) de l'orifice (19) est lisse.

Lorsque le pion (22) est plus court que l'épaisseur de la paroi (21) au niveau de l'orifice (19), la totalité des ailettes centrales (32) est incluse dans l'orifice (19). Les frottements des ailettes centrales (32) contre la surface interne (33) de l'orifice (19) font que l'élément de fixation (17) ne va pas ressortir de l'orifice (19).

Lorsque le pion (22) est plus long que l'épaisseur de la paroi (21) au niveau de l'orifice (19), la majorité des ailettes centrales (32) est incluse dans l'orifice (19). Ces ailettes centrales (32) jouent le même rôle que celui décrit ci-dessus.

En raison de la longueur plus importante, certaines des ailettes centrales (32) les plus proches de l'extrémité pointue (23) se retrouvent cependant en appui contre la surface (28), située à l'intérieur du carter (3) et autour de l'orifice (19) ménagé dans la paroi (21). Ces ailettes centrales (32) ressortent à l'opposé de l'entrée et se redéploient et s'écartent du pion (22), en raison de leur élasticité. Les ailettes centrales (27) forment ainsi un blocage.

En raison de la longueur plus importante, certaines des ailettes centrales (32) les plus proches de la base (24) se retrouvent cependant en appui contre la surface (31), située à l'extérieur du carter (3) et autour de l'orifice (19) ménagé dans la paroi (21). En raison de leur positionnement, ces ailettes centrales (32) jouent alors le même rôle que les ailettes de base (29) de la première forme de réalisation.

Dans les deux formes de réalisation, le pion (22) avec ses ailettes (26) est moulé directement avec la goulotte (4). D'autres moyens de fixation, par exemple par vis (34), complètent l'arrimage de la goulotte (4) au carter d'embrayage (3). Dans ce cas, l'élément de fixation (17), une fois en place dans l'environnement exigu, permet de positionner correctement la vis (34) tout en assurant l' anti-rotation de la goulotte (4).

La présente invention n'est pas limitée aux modes de réalisation décrits et illustrés. De nombreuses modifications peuvent être réalisées, sans pour autant sortir du cadre défini par la portée du jeu de revendications.

## Revendications

1. Goulotte pour véhicule automobile, destinée à faire cheminer et à maintenir un ou plusieurs câbles électriques (11, 12), comprenant un corps principal (6, 7), formant un canal (10), dans lequel s'insère le ou les câbles électriques (11, 12), et un élément mâle de fixation (17), formé par un pion rectiligne (22) avec une base (24) et une extrémité libre pointue (23), associé au corps principal (6, 7), apte à pénétrer dans un orifice (19) ménagé dans un support (3) présent dans le véhicule, de façon à la solidariser au support (3), et comprenant des moyens d'ancrage (26) formés par au moins une ailette (29), se déployant latéralement à partir du pion rectiligne (22), possédant une capacité de déformation et venant coopérer avec l'orifice (19) du support (3), de façon à empêcher toute sortie de l'élément mâle (17) de l'orifice (19) et à empêcher la goulotte (4) de se désolidariser dudit support (3), **caractérisé en ce que** l'ailette (29) se déploie latéralement à partir de la base (24), en direction de l'extrémité libre pointue (23) du pion (22), ladite ailette (29) venant en appui contre une paroi extérieure (31) entourant l'orifice (19) du support (3) et **en ce qu'**une deuxième ailette (27) se déploie latéralement à partir de l'extrémité libre pointue (23), en direction de la base (24) du pion (22), ladite deuxième ailette (27) venant en appui contre une paroi intérieure (28) entourant l'orifice (19) du support (3).

2. Goulotte selon la revendication 1, **caractérisée en ce que** l'ailette (32) se déploie latéralement à partir du pion (22), sensiblement perpendiculairement par rapport à l'axe longitudinal dudit pion (22), ladite ailette (32) venant en appui contre une paroi interne (33) de l'orifice du support (3) et/ou contre une paroi intérieure (28) entourant l'orifice (19) du support (3) et/ou contre une paroi extérieure (31) entourant l'orifice (19) du support (3).

3. Goulotte selon l'une quelconque des revendications précédentes, **caractérisée en ce que** l'élément mâle (17) fait sailli latéralement à partir d'une patte transversale (18), se déployant sensiblement perpendiculairement par rapport au corps principal (6, 7) et sur une face opposée au canal (10).

4. Véhicule automobile, **caractérisé en ce qu'**il comprend une goulotte (4), selon l'une quelconque des revendications précédentes, destinée à faire cheminer et à maintenir un ou plusieurs câbles électriques (11, 12) et fixée sur un support (3) présent dans un ensemble moteur à combustion interne (1).

5. Véhicule selon la revendication 4, **caractérisé en ce que** le support est un carter d'embrayage (3) ou un autre élément du moteur, l'élément mâle (17) pénétrant dans un orifice (19) ménagé dans le carter (3) ou dans l'autre élément du moteur.

## Claims

1. Cable trough for motor vehicle, designed to route and to hold one or more electric cables (11, 12), comprising a main body (6, 7) forming a channel (10) in which the electric cable or cables (11, 12) is or are inserted, and a male fastening element (17), formed by a rectilinear pin (22) with a base (24) and a pointed free end (23), associated with the main body (6, 7), capable of entering an orifice (19) arranged in a support (3) that is present in the vehicle, so as to secure it to the support (3), and comprising anchoring means (26) formed by at least one fin (29), being deployed laterally from the rectilinear pin (22), having a deformation capability and interacting with the orifice (19) of the support (3), so as to prevent any retraction of the male element (17) from the orifice (19) and to prevent the cable trough (4) from separating from the said support (3), **characterized in that** the fin (29) is deployed laterally from the base (24), in the direction of the pointed free end (23) of the pin (22), the said fin (29) resting against an outer wall (31) surrounding the orifice (19) of the support (3), and **in that** a second fin (27) is deployed laterally from the pointed free end (23), in the direction of the base (24) of the pin (22), the said second fin (27) resting against an inner wall (28) surrounding the orifice (19) of the support (3).

2. Cable trough according to Claim 1, **characterized in that** the fin (32) is deployed laterally from the pin (22) substantially perpendicularly relative to the longitudinal axis of the said pin (22), the said fin (32) resting against an inner wall (33) of the orifice of the support (3) and/or against an inner wall (28) surrounding the orifice (19) of the support (3) and/or against an outer wall (31) surrounding the orifice (19) of the support (3).

3. Cable trough according to either one of the preceding claims, **characterized in that** the male element (17) protrudes laterally from a transverse mount (18), being deployed substantially perpendicularly relative to the main body (6, 7) and on a face opposite to the channel (10).

4. Motor vehicle, **characterized in that** it comprises a cable trough (4) according to any one of the preceding claims, designed to route and to hold one or more electric cables (11, 12) and attached to a support (3) that is present in an internal combustion engine assembly (1).

5. Vehicle according to Claim 4, **characterized in that** the support is a clutch housing (3) or another element of the engine, the male element (17) entering an orifice (19) arranged in the housing (3) or in the other element of the engine.

## Patentansprüche

1. Rinne für Kraftfahrzeug, die dazu bestimmt ist, ein oder mehrere elektrische Kabel (11, 12) zu führen und zu halten, mit einem Hauptkörper (6, 7), der einen Kanal (10) bildet, in den das oder die elektrischen Kabel (11, 12) eingesetzt sind, einem Befestigungs-Steckelement (17), das durch einen geradlinigen Zapfen (22) mit einer Basis (24) und einem zugespitzten freien Ende (23) gebildet ist, dem Hauptkörper (6, 7) zugeordnet ist und in eine Öffnung (19) eindringen kann, die in einem im Fahrzeug vorhandenen Träger (3) ausgebildet ist, um sich mit dem Träger (3) fest zu verbinden, und Verankerungsmitteln (26), die durch wenigstens einen Flügel (29) gebildet sind, der sich ausgehend von dem geradlinigen Zapfen (22) seitlich entfaltet, ein Verformungsvermögen besitzt und mit der Öffnung (19) des Trägers (3) zusammenwirkt, derart, dass jeder Austritt des Steckelements (17) aus der Öffnung (19) verhindert wird und so verhindert wird, dass sich die Rinne (4) von dem Träger (3) löst, **dadurch gekennzeichnet, dass** sich der Flügel (29) ausgehend von der Basis (24) in Richtung des zugespitzten freien Endes (23) des Zapfens (22) seitlich entfaltet, wobei sich der Flügel (29) an einer Außenwand (31) abstützt, die die Öffnung (19) des Trägers (3) umgibt, und dass sich ein zweiter Flügel (27) ausgehend von dem zugespitzten freien Ende (23) in Richtung der Basis (24) des Zapfens (22) seitlich entfaltet, wobei sich der zweite Flügel (27) an einer Innenwand (28) abstützt, die die Öffnung (19) des Trägers (3) umgibt.

2. Rinne nach Anspruch 1, **dadurch gekennzeichnet, dass** sich der Flügel (32) ausgehend von dem Zapfen (22) seitlich im Wesentlichen senkrecht in Bezug auf die Längsachse des Zapfens (22) entfaltet, wobei sich der Flügel (32) an einer Innenwand (33) der Öffnung des Trägers (3) und/oder an einer Innenwand (28), die die Öffnung (19) des Trägers (3) umgibt, und/oder an einer Außenwand (31), die die Öffnung (19) des Trägers (3) umgibt, abstützt.

3. Rinne nach einem der vorhergehenden Ansprüche, **dadurch gekennzeichnet, dass** das Steckelement (17) von einer transversalen Lasche (18) seitlich vorsteht und sich im Wesentlichen senkrecht in Bezug auf den Hauptkörper (6, 7) und auf einer dem Kanal (10) gegenüberliegenden Seite entfaltet.

4. Kraftfahrzeug, **dadurch gekennzeichnet, dass** es eine Rinne (4) nach einem der vorhergehenden Ansprüche umfasst, die dazu bestimmt ist, ein oder mehrere elektrische Kabel (11, 12) zu führen und zu halten, und an einem Träger (3) befestigt ist, der in einer Brennkraftmaschinenanordnung (1) vorhanden ist.

5. Fahrzeug nach Anspruch 4, **dadurch gekennzeichnet, dass** der Träger ein Kupplungsgehäuse (3) oder ein anderes Element des Motors ist, wobei das Steckelement (17) in eine in dem Gehäuse (3) oder in dem anderen Element der Maschine ausgesparte Öffnung (19) eindringt.
